# EUROPEAN PATENT SPECIFICATION

(11) **EP 3 434 590 B1**
(45) Date of publication and mention of the grant of the patent: **27.11.2019**
(21) Application number: 17400045.5
(22) Date of filing: 27.07.2017
(51) Int. Cl.: B64C 27/78, B64C 27/605, B64C 11/36, B64C 27/82, B64C 27/72

(54) **A CONTROL TRANSFER MEMBER FOR A PITCH CONTROL DEVICE OF A DUCTED ROTORCRAFT TAIL ROTOR**
STEUERUNGSÜBERTRAGUNGSELEMENT FÜR EINE ANSTELLWINKELSTEUERUNGSVORRICHTUNG FÜR EINEN HECKROTOR EINES DREHFLÜGLERS
ÉLÉMENT DE TRANSFERT DE COMMANDE POUR UN DISPOSITIF DE COMMANDE DE PAS DU FENESTRON D'UN GIRAVION

(43) Date of publication of application: 30.01.2019
(73) Proprietor: AIRBUS HELICOPTERS DEUTSCHLAND GmbH, 86609 Donauwörth (DE)
(72) Inventor: Kuntze-Fechner, Gerald, 83703 Gmund am Tegernsee (DE); Vogl, Julius, 86368 Gersthofen (DE)
(74) Representative: GPI & Associés

(56) References cited:
- US-A- 5 249 925
- US-A- 5 383 767
- US-A- 5 415 525
- US-A- 5 478 204
- US-A- 5 542 818

## Description

The invention is related to a control transfer member for a pitch control device of a ducted rotorcraft tail rotor.

The document US 4,809,931 describes a rotorcraft with a main rotor and a counter-torque rotor that is positioned at a tail boom of the rotorcraft. The counter-torque rotor is rotatably arranged within a transverse duct located at a duct-type portion of the tail boom and, thus, embodied as a ducted rotorcraft tail rotor in the form of a Fenestron® tail rotor. This duct-type portion is provided with a shroud that defines the transverse duct. However, as such a counter-torque rotor and, more specifically, structure and arrangement of a ducted rotorcraft tail rotor in general, as well as suitable means for rotationally driving it, are well known by the skilled person, a more detailed description thereof is omitted for brevity and conciseness.

Beyond that, the documents US 3,594,097, US 4,626,172, US 4,626,173, US 5,306,119, and US 5,383,767 describe suitable pitch control devices for controlling collective pitch of corresponding rotor blades of a ducted rotorcraft tail rotor. More specifically, these pitch control devices respectively include a hub that consists of several components including, as main components, a hub body, a splined flange to which the hub body is mounted, and a pitch control member, which is also referred to as the "control spider". The hub body is provided for suspension of the corresponding rotor blades and connection of these rotor blades to an associated tail gearbox that drives the ducted rotorcraft tail rotor. The rotor blades must be supported along their blade axes to enable a rotation thereof around the blade axes and, thus, pitch angle control of the rotor blades.

The document US 5,415,525 describes a pitch beam that is located adjacent to a rotor hub and that supports flexure members. The pitch beam includes four arms that extend radially from an associated rotor axis and terminate at a ring. Eight mounting flanges, one for each flexure member, are located at a radial periphery of the pitch beam arms. The pitch beam arms are joined at a central hub which receives a rotating control shaft. Each pitch beam is made of aluminum or fiber reinforced composite material, such as epoxy resin reinforced with graphite fibers. The upper or opposite end of each flexure member is formed with a thick flange connected by multiple bolted attachments to a corresponding mounting flange which is supported on the pitch beam. Each one of the flexure members is connected to a pitch shaft with a universal joint in the eccentric direction of its pitch axis. Each flexure member is made of titanium.

In all of these pitch control devices, the control spider is separated into two parts for accessibility and assembling reasons:
a control spider ring, which serves as control transfer member, and a center plate, which serves as control input member. The center plate is usually used for connection to a respective tail rotor actuator after installation to a given rotorcraft.

The control spider, i. e. the control spider ring in combination with the center plate, must be as stiff as possible in order to guarantee a required controllability and control range despite possible deformations under loading. Consequently, respective push rods provided at the control spider ring must be as strong and stiff as possible in push and pull direction.

Furthermore, due to a high rotational speed of the ducted rotorcraft tail rotor in operation, the control spider ring needs to be centered at the center plate. This is usually realized by means of a step provided at an outer circumference of the center plate, which is in contact with the control spider ring. In other words, the control spider ring is usually embodied in a cup-shaped form with a bottom section that is provided with a cut-out portion for accommodation of the center plate.

In operation, pitch angle control as such is performed by means of the control spider, which translates vertical strikes of an associated control spider actuator, i. e. strikes in a direction that is perpendicular to a respective rotor axis, into rotation of the rotor blades. More specifically, a respective vertical strike of the control spider actuator can be transferred into rotation of the rotor blades by providing a lever arm between the control spider and the rotor blades, which are supported at the hub body by associated bearings.

The control spider creates a comparatively stiff connection from the control spider actuator to the rotor blades whilst keeping all components below it, e. g. blade bolts, accessible for inspection in order to ensure a required controllability of the ducted rotorcraft tail rotor. However, the connection of a given rotor blade to the control spider via the lever arm is subject to several distinct manufacturing tolerances. These manufacturing tolerances respectively depend on an exact position and length of each lever arm, of the rotor blades towards each other in the hub body, and of the control spider itself. Resulting from an underlying number of rotor blades, all individual manufacturing tolerances of each connection add up to a recognizable total manufacturing tolerance.

More specifically, when attaching the control spider to the rotor blades, respectively added manufacturing tolerances of the hub body, the center plate, the control spider and the lever arms must be compensated, as otherwise they may lead to an interlocking of the respective components. Furthermore, movements resulting from the pitch control of the rotor blades must be compensated. In other words, vertical movements performed by the control spider actuator and, thus, the control spider result in rotational movement of the rotor blades around their respective longitudinal axes and, therefore, in a lateral movement of the lever arms. Moreover, even the control spider actuator is rotatably mounted around its vertical axis, so that also a comparatively insignificant rotation of the control spider actuator around its vertical axis may lead to lateral movements of respective push rods of the control spider, which must be compensated.

In current designs, maximum manufacturing tolerances are considered. In order to deal with these maximum manufacturing tolerances, frequently an oblong bushing is in use in the control spider, wherein a spherical joint of the lever arms can move laterally, or vice versa. This free movement results in vibrations, different characteristics in respective neutral pitch positions and imperfect controllability, even though respective control variations are only in a small range of control.

In addition, each movement of the control spider in relation to the rotor blades results in wear in either the oblong bushing or the spherical joint. For reducing this wear to an acceptable extend, hardened expensive materials need to be used for realization of the corresponding components of the pitch control device. This requirement together with the above described stiffness requirements, however, lead to pitch control devices that are usually comparatively heavy as a result of respectively selected materials and implementations. Furthermore, a separation of the conventional pitch control device in a comparatively great number of distinct components is required due to underlying assembling processes. Moreover, the required centering requires replacement of the complete conventional pitch control device, if the respective limits are exceeded.

The document US 5,249,925 describes a pitch control disk in the form of a concave shell which is constrained to rotate with a central shaft but free to slide axially relative to the central shaft. It is also fixed to the free end of a pitch control rod of the central shaft. The concave side of the pitch control disk faces the concave side of a rotor hub. These facing edges are provided with respective teeth. Each tooth of the rotor hub lies between two teeth of the pitch control disk and such a configuration defines a circular zig-zag slot between the hub and the pitch control disk. A pitch control lever from the root of each blade extends between the teeth of the rotor hub and the pitch control disk and has one end connected to the rotor hub by a hinge and another end connected to the pitch control disk by another hinge.

It is, therefore, an object of the present invention to provide a new control spider and, in particular, a new control transfer member for a pitch control device of a ducted rotorcraft tail rotor, which exhibits a reduced weight as well as a simplified structure that enables at least omission of the conventionally used oblong bushings and spherical joints.

This object is solved by a control transfer member for a pitch control device of a ducted rotorcraft tail rotor, the control transfer member comprising the features of claim 1.

More specifically, according to the present invention a control transfer member for a pitch control device of a ducted rotorcraft tail rotor comprises a ring-shaped connector that defines a rotation axis and that comprises at least two push rods that extend at least partly in parallel to the rotation axis. Each one of the at least two push rods is configured to be coupled to an associated pitch lever of a rotor blade of the ducted rotorcraft tail rotor. Each one of the at least two push rods comprises a first portion that extends at least approximately radially outwards from the ring-shaped connector, and a second portion that extends at least approximately perpendicularly from the first portion and at least approximately in parallel to the rotation axis. The first portion is formed as an integral part of the ring-shaped connector and the second portion is formed as an integral part of the first portion. The ring-shaped connector and each one of the at least two push rods further comprises a composite material, in particular a fiber reinforced polymer. Each one of the at least two push rods is connected to the ring-shaped connector via an associated stiffening rib for providing a first predetermined stiffness in a longitudinal stiffness direction that is parallel to the rotation axis of the ring-shaped connector, and each one of the at least two push rods comprises a torsional-soft area for providing a second predetermined stiffness in a circumferentially lateral direction that is tangential to the control transfer member, the first predetermined stiffness being greater than the second predetermined stiffness.

According to one aspect, the ring-shaped connector and each one of the at least two push rods and, preferably, the entire inventive control transfer member is implemented using carbon fiber reinforced polymers. However, other fiber reinforced polymers, such as e. g. glass fiber reinforced polymers or Aramid fiber reinforced polymers, may likewise or simultaneously be used.

Advantageously, by implementing the inventive control transfer member as a composite control spider ring using composite material, wherein the composite control spider ring preferably comprises push rods that are laterally flexible, but in pull- and push-direction stiff, the above-described possible interlocking of respective components due to manufacturing tolerances can reliably be avoided. A required lateral flexibility of the push rods is preferably created by means of a torsional soft cross section on top of each push rod. Thus, a required pull and push stiffness of the arms can be realized whilst enabling by means of the torsional soft cross sections the possibility to bend the push rods far enough in radial direction of the inventive control transfer member in order to compensate an underlying manufacturing tolerance, which is typically within a range of ±0,5mm.

Furthermore, by implementing the push rods using composite material, associated rotor blades of a given ducted rotorcraft tail rotor can be fixed tightly to the inventive control transfer member. Thus, manufacturing tolerances or movements resulting from pitch control of the associated rotor blades can advantageously be compensated without a need for oblong bushings, universal joints, or ball joints. If, however, such oblong bushings, universal joints, or ball joints are nevertheless used, the lateral flexibility of the push rods is suitable to reduce play between the inventive control transfer member and respective blade connections, thus, resulting in a more direct control of the associated rotor blades and less wear of the oblong bushings, universal joints, or ball joints, whilst guaranteeing a comparatively high push and pull stiffness and strength of the push rods. In other words, a movement of the inventive control transfer member relative to the associated rotor blades can advantageously be eliminated such that the wear of the oblong bushings, universal joints, or ball joints is reduced drastically. Moreover, instead of a conventional ball joint-bushing combination, a ball bearing can be used.

According to one aspect, implementing the inventive control transfer member as a composite control spider ring using composite material allows to decrease an overall weight of the control transfer member and, thus, of a respective pitch control device for a ducted rotorcraft tail rotor significantly compared to a conventional metallic design. However, underlying manufacturing costs can at least be maintained at a comparable value.

Preferably, the push rods of the inventive control transfer member are designed flexible enough in order to allow installation of the inventive control transfer member after installation of a respective ducted rotorcraft tail rotor on a given rotorcraft. Consequently, an associated control input member, e. g. a given center plate, can advantageously be integrated into the inventive control transfer member. Thus, weight and costs may even be reduced further.

More specifically, according to one aspect the push rods of the inventive control transfer member are flexible in the control transfer member's circumferential direction and alternatively, or in addition, also flexible in the radial direction of the control transfer member. Furthermore, the push rods are stiff in their longitudinal direction in order to transfer respective control loads precisely to the rotor blades of the ducted rotorcraft tail rotor.

Advantageously, the circumferential flexibility is realized by a torsional-soft area provided on top of each push rod, which is e. g. the result of a U-shaped cut-out in the ring-shaped connector of the inventive control transfer member. The flexibility of each push rod in the radial direction of the control transfer member is advantageously obtained by a flat design of each push rod with a rectangular cross section. The necessary stiffness in the longitudinal direction of each push rod is on the one hand preferably provided by using stiff composite material such as carbon fiber reinforced polymers, and on the other hand by the stiffening rib located on top of each push rod. This stiffening rib advantageously transfers respective push and pull loads of the push rods, which come from respective rotor blade forces, into the ring-shaped connector.

To fulfill the requirement of eliminating the state of the art oblong bushings, enabling a lateral movement respectively a movement in circumferential direction of the control transfer member of approximately ± 0,5 - 0,7mm is sufficient. Furthermore, by using carbon fiber reinforced polymers, an underlying risk of fatigue failure due to periodical bending and due to vibrations is eliminated due to respective material characteristics.

According to a further preferred embodiment, the associated stiffening rib is arranged between the first portion of the at least one of the at least two push rods and the ring-shaped connector.

According to a further preferred embodiment, each one of the at least two push rods is at least approximately L-shaped.

According to a further preferred embodiment, each one of the at least two push rods comprises a third predetermined stiffness in a direction that is transversal to the rotation axis of the ring-shaped connector, the third predetermined stiffness being smaller than the first predetermined stiffness.

According to a further preferred embodiment, each one of the at least two push rods comprises a flexible area for providing the third predetermined stiffness.

According to a further preferred embodiment, the composite material comprises at least one of carbon fiber reinforced polymers, glass fiber reinforced polymers and aramid fiber reinforced polymers.

According to a further preferred embodiment, the ring-shaped connector and the at least two push rods define a spider-shaped structure.

The present invention further provides a pitch control device for a ducted tail rotor of a rotorcraft. The pitch control device comprises a control transfer member according to the present invention, as described above, and a disc-shaped control input member. The disc-shaped control input member is provided for being mounted to an associated pitch control shaft of the ducted tail rotor, and it is rigidly attachable to the control transfer member, preferably in a releasable manner.

The reason for the usage of the disc-shaped control input member is the need to connect the control transfer member to the rotor blades and to the associated pitch control shaft resp. an associated driving shaft. In order to realize these connections, the control transfer member is positioned at a respective hub body of a given rotor hub of the ducted tail rotor before the rotor blades are mounted to the hub body. Thus, every single rotor blade can first be connected to the control transfer member and afterwards be assembled to the hub body, e. g. with a bolt.

However, for positioning resp. reaching the bolts, there is a need for an opening in the middle of the hub body that allows to access the bolts with a tool and that enables afterwards attachment of the complete tail rotor to a given rotorcraft. This is achieved by means of the control input member, which is mounted to the control transfer member and the associated pitch control shaft resp. the associated driving shaft in a final mounting step.

It should be noted that the described flow of mounting steps is required when the push rods of the control transfer member are rigid in the control transfer member's radial direction. However, the push rods may alternatively be designed radially flexible. In this case, it is possible to assemble a respective tail rotor initially without the control transfer member, which may then be attached subsequently to the associated rotor blades, e. g. after having mounted the tail rotor to the given rotorcraft, by deflecting the push rods e. g. far enough radially inwards to position e. g. a spherical ball head bolt - mounted on each rotor blade pitch lever - in a cylindrical bushing mounted in the push rod. Alternatively, just a cylindrical bolt is fixed in the pitch lever of the rotor blade and a spherical bearing is used in the push rod. In any case, it is essential on the one hand to have enough flexibility to deflect the push rods for assembly, but on the other hand not to lose stiffness, which is required to keep the control transfer member in an exact predetermined position to ensure a precise transfer of control loads.

As a result of the above described configuration, a pitch control device with reduced manufacturing costs and a comparatively light weight can be obtained. Advantageously, the inventive pitch control device is easily adaptable to respectively underlying stiffness requirements. Furthermore, assembling of the pitch control device on a given rotorcraft can be simplified.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a side view of a rotorcraft with a ducted tail rotor according to the invention, and an enlarged perspective view of the ducted tail rotor,
- Figure 2 shows a partially cut plan view of the ducted tail rotor of Figure 1 with a pitch control device according to the invention,
- Figure 3 shows a perspective view of the pitch control device of Figure 2, with a control input member and a control transfer member according to the invention, and
- Figure 4 shows a perspective view of the control transfer member of Figure 3.

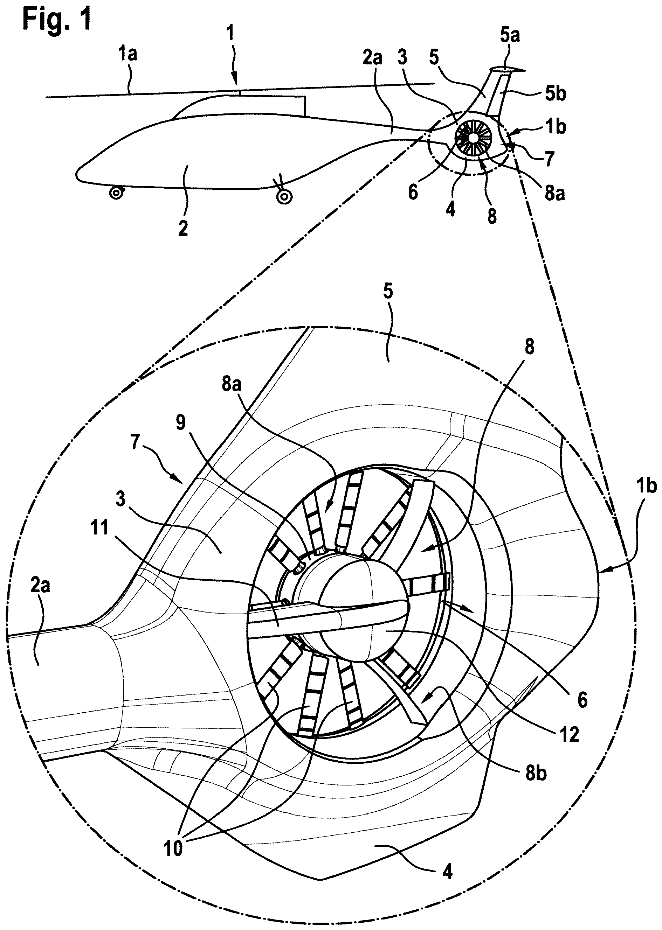

Figure 1 shows a rotorcraft 1 with a fuselage 2 that comprises a tail boom 2a. The rotorcraft 1 is illustratively embodied, and therefore hereinafter for simplicity also referred to, as a helicopter.

The helicopter 1 comprises at least one main rotor 1a configured to provide lift and forward thrust during operation, and at least one counter-torque device 8 configured to provide counter-torque during operation, i. e. to counter the torque created by rotation of the at least one main rotor 1a for purposes of balancing the helicopter 1 in terms of yaw. It should, however, be noted that the present invention is not limited to helicopters and may likewise be applied to other aircrafts that are equipped with rotary wings and at least one counter-torque device according to the present invention.

The at least one counter-torque device 8 is illustratively provided at an aft section 1b of the tail boom 2a, which preferably comprises at least one duct-type portion 7. By way of example, the aft section 1b further comprises a bumper 4 and a fin 5 in the form of a T-tail having a tail wing 5a and a rudder 5b. The tail wing 5a is preferably adjustable in its inclination and can overtake the functioning of a horizontal stabilizer. Alternatively, or in addition, the helicopter 1 is provided with a suitable horizontal stabilizer. The rudder 5b is preferably adapted to provide for enhanced directional control of the helicopter 1 and can preferably be deflected to large angles to reduce a given lateral drag of the fin 5 in sideward flight.

However, it should be noted that the T-tail configuration of the fin 5 and the rudder 5b, as well as the horizontal stabilizer, are merely described for illustrating one exemplary embodiment of the present invention and not for limiting the invention accordingly. Instead, the present invention as described hereinafter can likewise be applied to any duct-type portion of a rotorcraft, independent on whether this duct-type portion is provided with a T-tail fin or an otherwise configured fin, with or without a rudder and with or without a horizontal stabilizer.

Preferably, the duct-type portion 7 is provided with a shroud 3 that defines at least one transverse duct 6 having preferentially an at least approximately circular or annular cross section, wherein at least one counter-torque rotor 8a is arranged rotatably. The at least one transverse duct 6 illustratively extends through the shroud 3. Furthermore, at least one counter-torque stator 8b is fixedly arranged inside the at least one transverse duct 6 in order to support the at least one counter-torque rotor 8a rotatably.

The counter-torque rotor 8a, the counter-torque stator 8b and the shroud 3, i. e. the transverse duct 6, illustratively define the at least one counter-torque device 8 of the helicopter 1, which is embodied in the form of a ducted tail rotor and, more specifically, in the form of a Fenestron® tail rotor. Accordingly, for simplicity and clarity, the counter-torque device 8 and, in particular, the counter-torque rotor 8a is hereinafter also referered to as the "ducted tail rotor" resp. as the "ducted rotorcraft tail rotor".

The at least one ducted tail rotor 8a illustratively comprises a rotor hub 9 with a rotor axis and a plurality of rotor blades 10 that are attached to the rotor hub 9. The rotor blades 10 are preferably, but not necessarily, distributed in an angularly uneven manner on the rotor hub 9 using phase modulation. More specifically, phase modulation describes the technique of reshaping the noise-frequency spectrum, e. g. such that the geometric angular positions of the rotor blades 10 on the rotor hub 9 are distributed using the sinusoidal modulation law described in the document EP 0 680 871 A1.

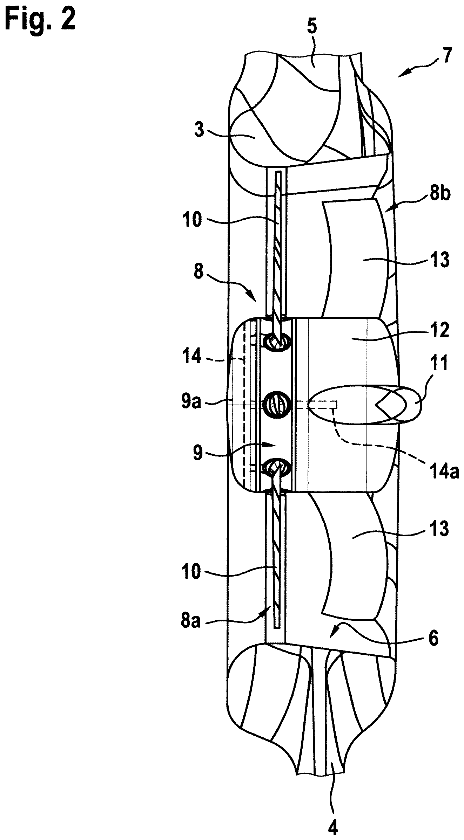

The at least one counter-torque stator 8b illustratively comprises a drive shaft fairing 11 that is fixedly arranged inside the at least one transverse duct 6 and connects a gearbox fairing 12 to the shroud 3. The drive shaft fairing 11 is preferably adapted to receive a power transmission shaft of the at least one ducted tail rotor 8a. The gearbox fairing 12 is further connected to the shroud 3 by means of associated stator vanes (13 in Figure 2). Preferably, the gearbox fairing 12 is adapted to receive a rotor drive transmission of the at least one ducted tail rotor 8a and can further by adapted to receive pitch variation mechanisms for the rotor blades 10.

Figure 2 shows the duct-type portion 7 of Figure 1 with the at least one ducted tail rotor 8a and the at least one counter-torque stator 8b, which are arranged in the at least one transverse duct 6 of the shroud 3. Preferably, the at least one ducted tail rotor 8a is arranged in close proximity to the at least one counter-torque stator 8b and, more specifically, upstream to the at least one counter-torque stator 8b with respect to an air flow generated by the ducted tail rotor 8a in operation.

The at least one ducted tail rotor 8a comprises the rotor blades 10 and the rotor hub 9, which is illustratively covered by a rotor hub cover 9a. The at least one counter-torque stator 8b comprises the drive shaft fairing 11 that is fixedly arranged inside the at least one transverse duct 6 and connects the gearbox fairing 12 to the shroud 3. The gearbox fairing 12 is connected to the shroud 3 by means of associated stator vanes 13.

According to one aspect, the ducted tail rotor 8a is provided with a pitch control device 14 that is preferably at least adapted for controlling collective pitch of the rotor blades 10. The pitch control device 14 is preferably actuatable by means of an associated pitch control shaft 14a which, in turn, is e. g. operated by the pitch variation mechanisms accommodated in the gearbox fairing 12.

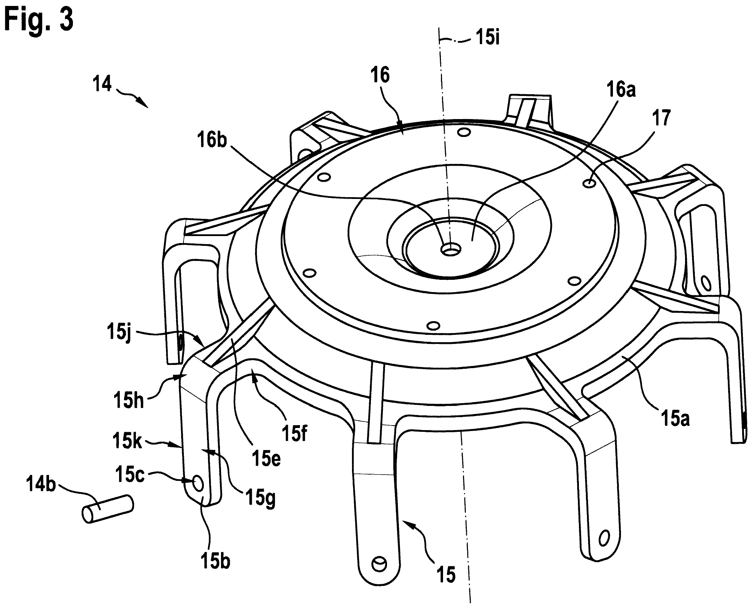

Figure 3 shows the pitch control device 14 of Figure 2, which is preferably at least adapted for use with the ducted tail rotor 8a of the helicopter 1 of Figure 1. According to one aspect, the pitch control device 14 comprises at least a control transfer member 15 and a control input member 16.

The control input member 16 is preferably provided for being mounted to the pitch control shaft 14a of the ducted tail rotor 8a of Figure 1 and Figure 2. Thus, the control input member 16 is directly moveable by means of the pitch control shaft 14a so that axial movements of the pitch control shaft 14a result in axial movements of the control input member 16, i. e. movements in direction of a rotation axis 15i of the control input member 16. The latter entrains the control transfer member 15 into axial movements when being moved axially.

According to one aspect, the control input member 16 is at least approximately disc-shaped and comprises a central part 16a. The central part 16a is preferably equipped with a mounting component resp. an accommodation 16b, which is provided for being mounted to resp. for accommodating at least partly the pitch control shaft 14a of the ducted tail rotor 8a of Figure 1 and Figure 2.

Preferably, the control input member 16 is rigidly attached to the control transfer member 15, preferably in a releasable manner. The rigid attachment is preferentially achieved using suitable attachment elements 17, such as screws, bolts and/or rivets.

The control transfer member 15 preferably comprises a ring-shaped connector 15a that defines the rotation axis 15i, which is common to the control transfer member 15 and the control input member 16 upon mounting of both components to each other. The ring-shaped connector 15a is preferentially connected to at least two push rods 15b, which illustratively extend at least partly in parallel to the rotation axis 15i. According to one aspect, the ring-shaped connector 15a and the at least two push rods 15b define a spider-shaped structure.

According to the invention, the ring-shaped connector 15a and each one of the at least two push rods 15b comprises a composite material, in particular a fiber reinforced polymer. More specifically, the composite material preferably comprises at least one of carbon fiber reinforced polymers, glass fiber reinforced polymers and aramid fiber reinforced polymers.

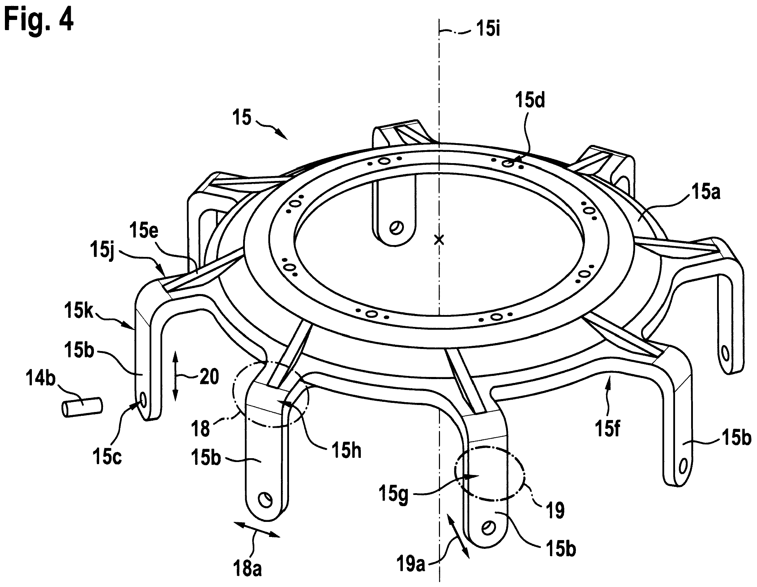

According to one aspect, each one of the at least two push rods 15b is provided for being coupled to an associated pitch lever of the rotor blades 10 of the ducted tail rotor 8a of Figure 1 and Figure 2, so that the control transfer member 15 may transfer pitch control movements of the pitch control device 14 to the associated pitch levers in Figure 4. Therefore, the control transfer member 15 preferably comprises at least two push rods that are each coupled to a respectively associated pitch lever. More specifically, each push rod exemplarily comprises a guide lug for reception and accommodation of the respectively associated pitch lever.

Preferably, one push rod is provided for each pitch lever of each one of the rotor blades 10 of the ducted tail rotor 8a of Figure 1 and Figure 2. However, for simplicity and clarity of the drawings, only a single push rod is labelled with the reference sign 15b, only a single respective guide lug that is provided in this single push rod 15b is labelled with the reference sign 15c, and only a single pitch lever is illustrated and labelled with the reference sign 14b.

It should be noted that for simplicity and clarity of the description, hereinafter only the single push rod that is labelled with the reference sign 15b is described in more detail. However, the detailed description of this push rod 15b should be understood as being representative for each push rod of the control transfer member 15.

According to one aspect, the push rod 15b is at least approximately L-shaped. According to the invention, the push rod 15b comprises a first portion 15j that extends at least approximately radially outwards from the ring-shaped connector 15a. In other words, the first portion 15j illustratively defines a radial protrusion resp. extension of the ring-shaped connector 15a, which is at least approximately perpendicular to the rotation axis 15i, and formed as an integral part of the ring-shaped connector 15a.

Illustratively, the push rod 15b and, in particular, the first portion 15j is formed by creating respective cut-outs in the ring-shaped connector 15a. More specifically, according to one aspect, the ring-shaped connector 15a initially encompasses the first portion 15j. Then, the ring-shaped connector 15a is machined by cutting-out at least approximately U-shaped parts resp. cut-outs 15f at the outer periphery of the ring-shaped connector 15a such that between two in circumferential direction adjacent cut-outs 15f the first portion 15j of the push rod 15b remains.

According to the invention, the push rod 15b further comprises a second portion 15k that extends at least approximately perpendicularly from the first portion 15j and at least approximately in parallel to the rotation axis 15i. The second portion 15k is formed as an integral part of the first portion 15j. Preferably, at least the second portion 15k exhibits a flat design with a rectangular cross section. Illustratively, the first and second portions 15j, 15k form the above-mentioned L-shape.

According to the invention, the push rod 15b is also connected to the ring-shaped connector 15a via an associated stiffening rib 15e. The latter is preferably arranged between the first portion 15j of the push rod 15b and the ring-shaped connector 15a.

Furthermore, the push rod 15b preferably comprises a torsional-soft area 15h and an optional flexible area 15g. The torsional-soft area 15h is preferably arranged in a region of the push rod 15b, where the first portion 15j is joined to the second portion 15k. The optional flexible area 15g is exemplarily provided as part of the second portion 15k.

According to the invention, the push rod 15b exhibits a first predetermined stiffness in a direction (20 in Figure 4) that is parallel to the rotation axis 15i of the ring-shaped connector 15a. The push rod 15b further exhibits a second predetermined stiffness in a direction (18a in Figure 4) that is tangential to the control transfer member 15, and optionally or alternatively a third predetermined stiffness in a direction (19a) that is transversal to the rotation axis 15i of the ring-shaped connector 15a. According to the invention, the first predetermined stiffness is greater than the second predetermined stiffness and, preferentially, the third predetermined stiffness is smaller than the first predetermined stiffness.

Figure 4 shows the control transfer member 15 of Figure 3 for further illustrating preferred characteristics thereof. As is clear from Figure 3, the control transfer member 15 is rigidly attachable to the control input member 16 of Figure 3 using the suitable attachment elements 17 of Figure 3. More specifically, the disc-shaped control input member 16 is preferably rigidly attachable to the ring-shaped connector 15a of the control transfer member 15, which is therefore, preferentially, provided with suitable accommodations 15d for accommodation of the suitable attachment elements 17. By way of example, the suitable accommodations 15d may be embodied as threaded holes, and so on.

Illustratively, in Figure 4 four push rods of the control transfer member 15 that are arranged one-after-another in circumferential direction of the ring-shaped connector 15a are respectively labelled with the reference sign 15b. However, for simplicity and clarity, each one of these four push rods 15b is only provided with different subgroups of the reference signs of the push rod 15b of Figure 3 for separately exemplifying different characteristics of the push rod 15b of Figure 3. Nevertheless, it should be noted that preferably each one of the four push rods 15b as well as each other one of the unlabelled push rods exhibits all of these described different characteristics.

More specifically, for a first push rod 15b, which is illustrated as the leftmost labelled push rod in Figure 4, only the first portion 15j, the second portion 15k, the stiffening rib 15e and the guide lug 15c, which is provided for connection to the pitch lever 14b, are labelled. According to the invention, the first push rod 15b exhibits a first predetermined stiffness in a direction 20 that is parallel to the rotation axis 15i of the ring-shaped connector 15a, i. e. with respect to movements of the first push rod 15b in the direction 20. According to the invention, the stiffening rib 15e provides the first predetermined stiffness.

For a second push rod 15b, which is illustrated as the second labelled push rod from the left in Figure 4, only the torsional-soft area 15h is labelled, which is further illustratively highlighted by an indication 18. According to the invention, the second push rod 15b exhibits a second predetermined stiffness in a direction 18a that is tangential to the control transfer member 15, i. e. with respect to movements of the second push rod 15b in the direction 18a. According to the invention, the torsional-soft area 15h provides the second predetermined stiffness. According to the invention, the first predetermined stiffness is greater than the second predetermined stiffness.

For a third push rod 15b, which is illustrated as the third labelled push rod from the left in Figure 4, only the optional or alternative flexible area 15g is labelled, which is further illustratively highlighted by an indication 19. According to one aspect, the third push rod 15b exhibits a third predetermined stiffness in a direction 19a that is transversal to the rotation axis 15i of the ring-shaped connector 15a, i. e. with respect to movements of the third push rod 15b in the direction 19a. Preferably, the optional or alternative flexible area 15g provides the third predetermined stiffness. Preferentially, the third predetermined stiffness is smaller than the first predetermined stiffness.

For a fourth push rod 15b, which is illustrated as the fourth labelled push rod from the left in Figure 4, only the cut-out 15f is labelled. According to one aspect, this cut-out 15f is at least approximately U-shaped and exemplarily arranged between the third and fourth push rods 15b.

It should be noted that the first predetermined stiffness is exemplarily only illustrated with respect to the first push rod 15b, while the second predetermined stiffness is exemplarily only illustrated with respect to the second push rod 15b, while the third predetermined stiffness is exemplarily only illustrated with respect to the third push rod 15b, and while the cut-out 15f is exemplarily only illustrated as being arranged between the third and fourth push rods 15b. However, as explained above all these characteristics preferably commonly apply to each one of the push rods 15b, as described above with respect to Figure 3.

Furthermore, it should be noted that the flexible area 15g is only optional according to one aspect of the present invention.

### Reference List

- 1: rotorcraft
- 1a: main rotor
- 1b: fuselage aft section
- 2: fuselage
- 2a: tail boom
- 3: shroud
- 4: bumper
- 5: fin
- 5a: tail wing
- 5b: rudder
- 6: transverse duct
- 7: duct-type tail portion
- 8: counter-torque device
- 8a: counter-torque rotor
- 8b: counter-torque stator
- 9: counter-torque rotor hub
- 9a: rotor hub cover
- 10: counter-torque rotor blades
- 11: drive shaft fairing
- 12: gearbox fairing
- 13: stator vanes
- 14: pitch control device
- 14a: pitch control shaft
- 14b: pitch lever or horn
- 15: control transfer member
- 15a: ring-shaped connector
- 15b: push rod
- 15c: guide lug
- 15d: accommodation
- 15e: push rod stiffening rib
- 15f: push rod cut-out
- 15g: flexible push rod area
- 15h: torsional-soft push rod area
- 15i: rotation axis
- 15j: radial protrusion portion
- 15k: axial lever portion
- 16: control input member
- 16a: central part
- 16b: pitch control shaft accommodation
- 17: attachment element
- 18: torsional-soft push rod area indication
- 18a: circumferentially directed lateral movement
- 19: flexible push rod area indication
- 19a: radial inwardly directed movement
- 20: longitudinal stiffness direction

## Claims

1. A control transfer member (15) for a pitch control device (14) of a ducted rotorcraft tail rotor (8a), comprising a ring-shaped connector (15a) that defines a rotation axis (15i) and that comprises at least two push rods (15b) that extend at least partly in parallel to the rotation axis (15i), wherein each one of the at least two push rods (15b) is configured to be coupled to an associated pitch lever (14b) of a rotor blade (10) of the ducted rotorcraft tail rotor (8a), wherein each one of the at least two push rods (15b) comprises a first portion (15j) that extends at least approximately radially outwards from the ring-shaped connector (15a), and a second portion (15k) that extends at least approximately perpendicularly from the first portion (15j) and at least approximately in parallel to the rotation axis (15i), wherein the first portion (15j) is formed as an integral part of the ring-shaped connector (15a) and the second portion (15k) is formed as an integral part of the first portion (15j), wherein the ring-shaped connector (15a) and each one of the at least two push rods (15b) further comprises a composite material, in particular a fiber reinforced polymer, **characterized in that** each one of the at least two push rods (15b) is connected to the ring-shaped connector (15a) via an associated stiffening rib (15e) for providing a first predetermined stiffness in a longitudinal stiffness direction (20) that is parallel to the rotation axis (15i) of the ring-shaped connector (15a), and each one of the at least two push rods (15b) comprises a torsional-soft area (15h) for providing a second predetermined stiffness in a circumferentially lateral direction (18a) that is tangential to the control transfer member (15), the first predetermined stiffness being greater than the second predetermined stiffness.

2. The control transfer member (15) of claim 1,
wherein the associated stiffening rib (15e) is arranged between the first portion (15j) of the at least one of the at least two push rods (15b) and the ring-shaped connector (15a).

3. The control transfer member (15) of claim 1,
wherein each one of the at least two push rods (15b) is at least approximately L-shaped.

4. The control transfer member (15) of claim 1,
wherein each one of the at least two push rods (15b) comprises a third predetermined stiffness in a direction (19a) that is transversal to the rotation axis (15i) of the ring-shaped connector (15a), the third predetermined stiffness being smaller than the first predetermined stiffness.

5. The control transfer member (15) of claim 4,
wherein each one of the at least two push rods (15b) comprises a flexible area (15g) for providing the third predetermined stiffness.

6. The control transfer member (15) of claim 1,
wherein the composite material comprises at least one of carbon fiber reinforced polymers, glass fiber reinforced polymers and aramid fiber reinforced polymers.

7. The control transfer member (15) of claim 1,
wherein the ring-shaped connector (15a) and the at least two push rods (15b) define a spider-shaped structure.

8. A pitch control device (14) for a ducted tail rotor (8a) of a rotorcraft (1), comprising
a control transfer member (15) according to one of the preceding claims, and
a disc-shaped control input member (16) that is provided for being mounted to an associated pitch control shaft (14a) of the ducted tail rotor (8a), wherein the control input member (16) is rigidly attachable to the control transfer member (15), preferably in a releasable manner.

## Patentansprüche

1. Steuerungsübertragungselement (15) für eine Anstellwinkelsteuerungsvorrichtung (14) eines kanalisierten Heckrotors (8a) eines Drehflüglers, umfassend einen ringförmigen Verbinder (15a), der eine Drehachse (15i) definiert und mindestens zwei Schubstangen (15b) umfasst, die sich mindestens teilweise parallel zur Drehachse (15i) erstrecken, wobei jede der mindestens zwei Schubstangen (15b) konfiguriert ist, um mit einem zugehörigen Anstellhebel (14b) eines Rotorblattes (10) des kanalisierten Heckrotors (8a) gekoppelt zu werden, wobei jede der mindestens zwei Schubstangen (15b) einen ersten Abschnitt (15j), der sich von dem ringförmigen Verbinder (15a) mindestens annähernd radial nach außen erstreckt, und einen zweiten Abschnitt (15k), der sich mindestens annähernd senkrecht von dem ersten Abschnitt (15j) und mindestens annähernd parallel zu der Drehachse (15i) erstreckt, umfasst, wobei der erste Abschnitt (15j) als integraler Bestandteil des ringförmigen Verbinders (15a) und der zweite Abschnitt (15k) als integraler Bestandteil des ersten Abschnitts (15j) ausgebildet ist, wobei der ringförmige Verbinder (15a) und jede der mindestens zwei Schubstangen (15b) ferner ein Verbundmaterial, insbesondere ein faserverstärktes Polymer, umfassen, **dadurch gekennzeichnet, dass** jede der mindestens zwei Schubstangen (15b) über eine zugeordnete Versteifungsrippe (15e) mit dem ringförmigen Verbinder (15a) verbunden ist, um eine erste vorgegebene Steifigkeit in einer Längssteifigkeitsrichtung (20) bereitzustellen, die parallel zur Drehachse (15i) des ringförmigen Verbinders (15a) verläuft, und jede der mindestens zwei Schubstangen (15b) einen torsionsweichen Bereich (15h) umfasst, um in einer Umfangsrichtung (18a), die tangential zu dem Steuerübertragungselement (15) ist, eine zweite vorgegebene Steifigkeit bereitzustellen, wobei die erste vorgegebene Steifigkeit größer als die zweite vorgegebene Steifigkeit ist.

2. Steuerungsübertragungselement (15) nach Anspruch 1, bei dem die zugeordnete Versteifungsrippe (15e) zwischen dem ersten Abschnitt (15j) der mindestens einen der mindestens zwei Schubstangen (15b) und dem ringförmigen Verbinder (15a) angeordnet ist.

3. Steuerungsübertragungselement (15) nach Anspruch 1, bei der jede der mindestens zwei Schubstangen (15b) mindestens annähernd L-förmig ist.

4. Steuerungsübertragungselement (15) nach Anspruch 1, bei dem jede der mindestens zwei Schubstangen (15b) eine dritte vorbestimmte Steifigkeit in einer Richtung (19a) aufweist, die quer zur Drehachse (15i) des ringförmigen Verbinders (15a) verläuft, wobei die dritte vorgegebene Steifigkeit kleiner als die erste vorgegebene Steifigkeit ist.

5. Steuerungsübertragungselement (15) nach Anspruch 4, bei dem jede der mindestens zwei Schubstangen (15b) einen flexiblen Bereich (15g) zum Bereitstellen der dritten vorgegebenen Steifigkeit umfasst.

6. Steuerungsübertragungselement (15) nach Anspruch 1, bei dem das Verbundmaterial mindestens eines von kohlenfaserverstärkten Polymeren, glasfaserverstärkten Polymeren und aramidfaserverstärkten Polymeren umfasst.

7. Steuerungsübertragungselement (15) nach Anspruch 1, bei dem der ringförmige Verbinder (15a) und die mindestens zwei Schubstangen (15b) eine spinnenförmige Struktur definieren.

8. Anstellwinkelsteuerungsvorrichtung (14) für einen kanalisierten Heckrotor (8a) eines Drehflüglers (1), umfassend ein Steuerungsübertragungselement (15) gemäß einem der vorhergehenden Ansprüche und
ein scheibenförmiges Steuereingabeelement (16), das vorgesehen ist, um an einer zugeordneten Anstellwinkelsteuerwelle (14a) des kanalisierten Heckrotors (8a) montiert zu werden, wobei das Steuereingabeelement (16) starr, vorzugsweise lösbar, an dem Steuerungsübertragungselement (15) befestigbar ist.

## Revendications

1. Élément de transfert de commande (15) pour un dispositif de commande de pas (14) d'un rotor de queue caréné de giravion (8a), comprenant un raccordement en forme d'anneau (15a) qui définit un axe de rotation (15i) et qui comprend au moins deux tiges formant poussoirs (15b) qui s'étendent au moins en partie parallèlement à l'axe de rotation (15i), dans lequel chacune des au moins deux tiges formant poussoirs (15b) est configurée pour être couplée avec un levier de pas associé (14b) d'une pale de rotor (10) du rotor de queue caréné de giravion (8a), dans lequel chacune des au moins deux tiges formant poussoirs (15b) comprend une première portion (15j) qui s'étend au moins approximativement radialement vers l'extérieur depuis le raccordement en forme d'anneau (15a), et une seconde portion (15k) qui s'étend au moins approximativement perpendiculairement depuis la première portion (15j) et au moins approximativement parallèlement à l'axe de rotation (15i), dans lequel la première portion (15j) forme une partie intégrale au raccordement en forme d'anneau (15a) et la seconde portion (15k) est formée en tant que partie intégrante de la première portion (15j), dans lequel le raccordement en forme d'anneau (15a) et chacune des au moins deux tiges formant poussoirs (15b) comprend en outre un matériau composite, en particulier un polymère renforcé de fibres, **caractérisé en ce que** chacune des au moins deux tiges formant poussoirs (15b) est raccordée au raccordement en forme d'anneau (15a) via une nervure de rigidité associée (15e) pour fournir une première rigidité prédéterminée suivant une direction de rigidité longitudinale (20) qui est parallèle à l'axe de rotation (15i) du raccordement en forme d'anneau (15a), et **en ce que** chacune des au moins deux tiges formant poussoirs (15b) comprend une zone élastique en torsion (15h) pour fournir une deuxième rigidité prédéterminée suivant une direction latérale en circonférence (18a) qui est tangente à l'élément de transfert de commande (15), la première rigidité prédéterminée étant supérieure à la deuxième rigidité prédéterminée.

2. Élément de transfert de commande (15) selon la revendication 1,
dans lequel la nervure de rigidité associée (15e) est aménagée entre la première portion (15j) d'au moins une des au moins deux tiges formant poussoirs (15b) et le raccordement en forme d'anneau (15a).

3. Élément de transfert de commande (15) selon la revendication 1,
dans lequel chacune des au moins deux tiges formant poussoirs (15b) est au moins approximativement en forme de L.

4. Élément de transfert de commande (15) selon la revendication 1,
dans lequel chacune des au moins deux tiges formant poussoirs (15b) comprend une troisième rigidité prédéterminée suivant une direction (19a) qui est transversale par rapport à l'axe de rotation (15i) du raccordement en forme d'anneau (15a), la troisième rigidité prédéterminée étant inférieure à la première rigidité prédéterminée.

5. Élément de transfert de commande (15) selon la revendication 4,
dans lequel chacune des au moins deux tiges formant poussoirs (15b) comprend une zone flexible (15g) pour apporter la troisième rigidité prédéterminée.

6. Élément de transfert de commande (15) selon la revendication 1,
dans lequel le matériau composite comprend au moins l'un des polymères parmi les : polymères renforcés de fibres de carbone, polymères renforcés de fibres de verre, et polymères renforcés de fibres d'aramide.

7. Élément de transfert de commande (15) selon la revendication 1,
dans lequel le raccordement en forme d'anneau (15a) et les au moins deux tiges formant poussoirs (15b) définissent une structure en forme d'étoile.

8. Dispositif de commande de pas (14) pour un rotor de queue caréné (8a) d'un giravion (1), comprenant :
un élément de transfert de commande (15) selon l'une quelconque des revendications précédentes, et
un élément d'entrée de commande en forme de disque (16) qui est agencé pour être monté sur un arbre de commande de pas associé (14a) du rotor de queue caréné (8a), dans lequel l'élément d'entrée de commande (16) peut être rigidement fixé à l'élément de transfert de commande (15), de préférence de façon détachable.
